# EUROPEAN PATENT SPECIFICATION

(11) **EP 2 009 941 B1**
(45) Date of publication and mention of the grant of the patent: **14.10.2009**
(21) Application number: 07253266.6
(22) Date of filing: 20.08.2007
(51) Int. Cl.: H04W 24/02

(54) **A method of adjusting the position of a picocell base station, as well as apparatus therefor**
Verfahren zur Einstellung der Position einer Picozellen-Basisstation und Gerät dafür
Procédé pour le réglage de la position d'une station de base de picocellule et appareil correspondant

(30) Priority: 29.06.2007 US 771644
(43) Date of publication of application: 31.12.2008
(73) Proprietor: LUCENT TECHNOLOGIES INC., Murray Hill NJ 07974-0636 (US)
(72) Inventor: Ho, Lester Tse Wee, Swindon Wiltshire, SN5 5GD (GB); Claussen, Holger, Swindon Wiltshire, SN5 3NJ (GB); Samuel, Louis Gwyn, Swindon Wiltshire, SN5 5DQ (GB)
(74) Representative: Sarup, David Alexander

(56) References cited:
- SNYDER T ET AL: "INDOOR WIRELESS NETWORKS: ISSUES AND ANSWERS" RF DESIGN, PRIMEDIA BUSINESS MAGAZINES & MEDIA, OVERLAND PARK, KS, US, vol. 25, no. 4, April 2002 (2002-04), page 42,46,48, XP001101562 ISSN: 0163-321X

## Description

### Field of the Invention

The present invention relates to telecommunications, in particular to wireless telecommunications.

### Description of the Related Art

Wireless telecommunications systems are well-known. Many such systems are cellular, in that radio coverage is provided by a bundle of radio coverage areas known as cells. In each cell, a base station is located that provides the radio coverage. Traditional base stations provide coverage in relatively large geographic areas and the corresponding cells are often referred to as macrocells.

It is possible to establish smaller sized cells within a macrocell. Cells that are smaller than macrocells are sometimes referred to as microcells, picocells, or femtocells, but we use the term picocells generically for cells that are smaller than macrocells. One way to establish a picocell is to provide a picocell base station that operates within a relatively limited range within the coverage area of a macrocell. One example of use of a picocell base station is to provide wireless communication coverage within a building.

Picocells can be deployed without detailed centralized cell-planning, for example by end-users or unskilled individuals installing picocell base stations in their offices and homes. In consequence, picocell base stations can often be placed at locations that are inappropriate. Locations are inappropriate if signals from such picocell base stations, in particular pilot signals, are detected by user terminals that are outside the building and are connected to the macrocell base station. An example of an inappropriate location is near a window and facing a busy road. A picocell base station in such a location causes interference to the macrocell base station. Also, undesirable handover attempts can be triggered, of that outside user terminal, from connection with the macrocell base station to connection with the picocell base station.

Picocell base stations are intended primarily for users belonging to a particular home or office. Handovers of radio connections of outside user terminals to the picocell base station are not desirable for several reasons. Firstly, handovers involve substantial resources in terms of signalling traffic. Secondly, in consequence, the process of handover to or from the picocell base station reduces the amount of data traffic that can be handled by the picocell base station at that time. This results in a reduction in quality of service to a home user.

The picocell base station is of a relatively low transmit power and hence each picocell is small compared to a macrocell. Accordingly, there can be a large number of picocells within an area roughly equivalent to the size of a macrocell. In consequence, a macrocell user moving along a road may frequently move in and out of range of picocell base stations, causing a rapid sequence of handover processes to and from picocells. As mentioned above, this is to the detriment of data handling performance of the picocells.

Accordingly, there is a need to reduce handovers of radio connections of outside user terminals to and from picocells.

In cellular systems involving macrocells, good base station positions are determined by careful cell planning, and there is optimisation of the position by trained radio engineers. Specifically, the engineer monitors performance statistics of deployed base stations and make on-site adjustments in base station orientation and location accordingly.

Background regarding indoor cellular networks is provided by Snyder T et al: "Indoor Wireless Networks: Issues and Answers" RF Design, Primedia Business Magazines & Media, Overland Park, KS, US, vol.25, no.4, April 2002, page 42,46,48, ISSN: 0163-321X.

### Summary of the Invention

The reader is referred to the appended independent claims. Some preferred features are laid out in the dependent claims.

The inventors realised that for base stations that are picocell base stations requiring optimisation by an engineer on site of location and orientation would be impractical, and is contrary to the autonomous and plug-and-play nature of some picocell base stations.
An example of the present invention is a method of adjusting the position of a picocell base station having a memory in which is stored a list of at least one preferred user terminal, each preferred user terminal having been authorised for communication with the picocell base station, the method comprising the steps of the picocell base station:
determining a rate of receipt of requests from other user terminals for handover to the picocell base station by counting the handover requests from the other user terminals;
dependent upon the rate of receipt exceeding a threshold, sending an indicator signal to a controller of the picocell base station indicating that the picocell base station should be repositioned.

### Brief Description of the Drawings

Embodiments of the present invention will now be described by way of example and with reference to the drawings, in which:
Figure 1 is a schematic diagram illustrating of a wireless communication network according to an embodiment of the invention,
Figure 2 is a diagram illustrating a picocell base station shown in Figure 1 located in a building,
Figure 3 is a diagram illustrating in more detail the picocell base station shown in Figures 1 and 2, and
Figure 4 is a flow chart illustrating operation of the picocell base station shown in Figure 3 in the network shown in Figure 1.

### Detailed Description

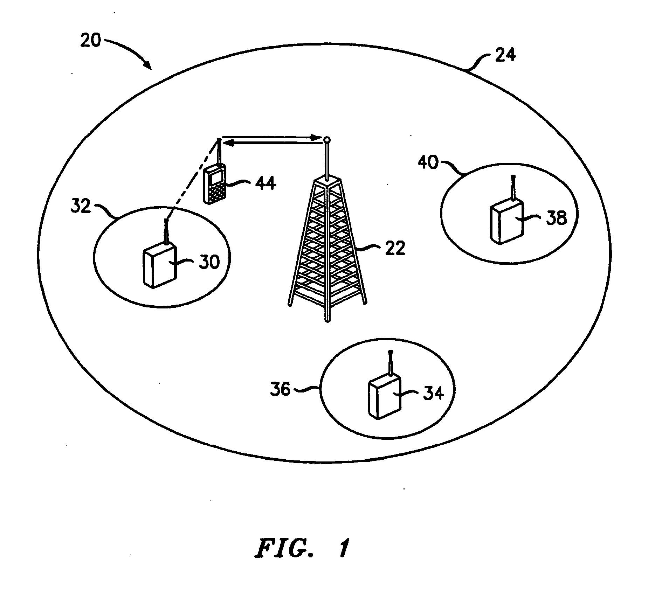

As shown in Figure 1, in a communication system 20, there is a base station 22 for wireless telecommunications. The base station has a radio coverage area 24 that is often referred to as a macrocell. The geographic extent of the macrocell 24 depends on the capabilities of the base station 22 and the surrounding geography.

Within the macrocell 24, a picocell base station unit (PCBSU) 30 provides wireless communications within a picocell 32. The radio coverage area of the picocell 30 is much less than that of the macrocell 24. For example, the picocell 32 corresponds in size to a user's home.

Another PCBSU 34 provides wireless coverage within a picocell 36. A further PCBSU 38 provides wireless coverage within a picocell 40.

It is possible for a mobile terminal 44 within the macrocell 24 to communicate with the macrocell base station 22 in known manner. When the mobile terminal 44 enters into a picocell 32 for which the mobile terminal is authorised for communications within the picocell base station 30, it is desirable to handover the connection with the mobile terminal from the macrocell to the picocell. In the example shown in Figure 1, the user of mobile terminal 44 is a preferred user to use picocell 32.

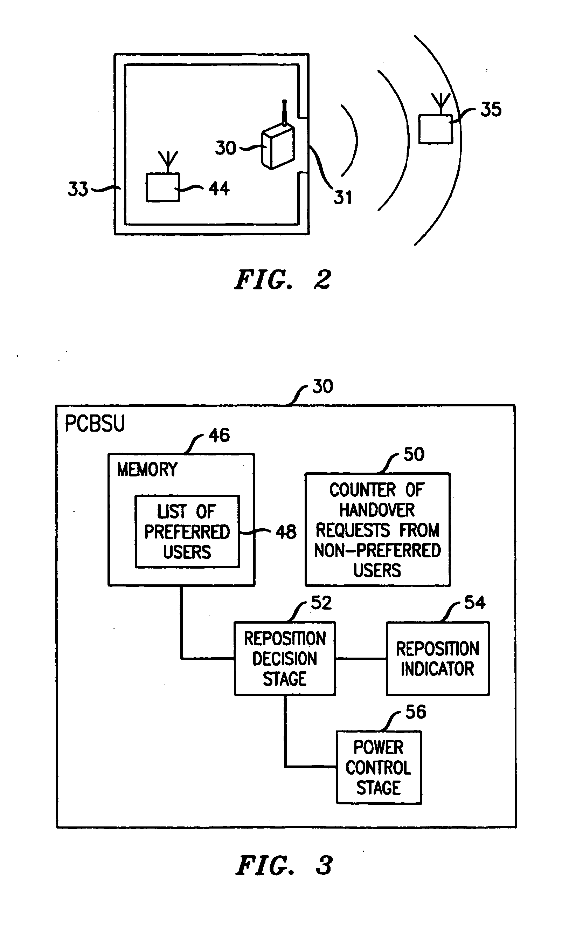

As shown in Figure 2, imagine that the picocell base station unit 30 is located inappropriately within a building 33 such as near a window 31, where the window is adjacent to a busy road. The picocell 32 then extends significantly beyond the building 33 through the window 31. In consequence, a user terminal 35 connected to the macrocell 24 but not being a user preferred for the picocell base station unit (PCBSU) 30, receives pilot signals from the PCBS U 30 and enters a process of handover to the PCBSU 30 by sending a handover request.

As shown in Figure 3, each picocell base station unit, PCBSU, 30 includes a memory 46 in which is stored a list 48 of "preferred" user terminals. The PCBSU 30 includes a counter 50 of handover requests received by the PCBSU 30 from other user terminals, which we can call "non-preferred" users, over a predetermined period. The PCBSU 30 also includes a reposition decision stage 52, connected to both a reposition indicator 54 and a power control stage 56. The reposition decision stage 52 is also connected to the memory 46.

### Operation

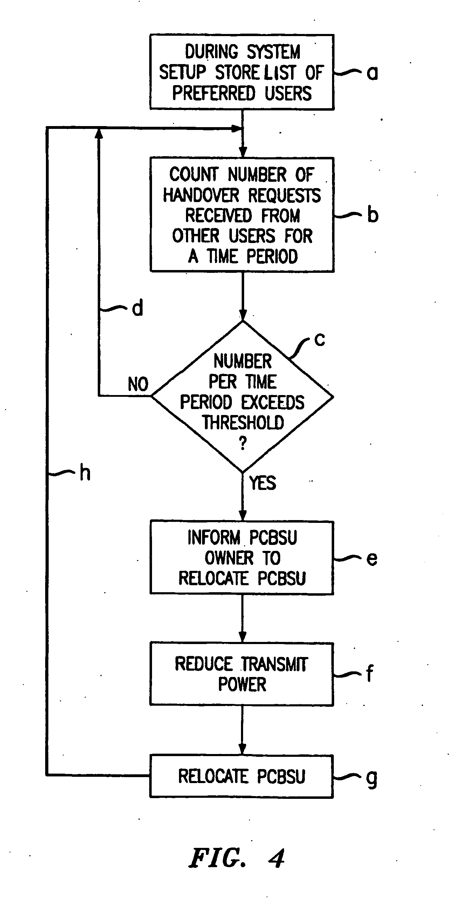

As shown in Figure 4, the list 48 of preferred user terminals is created (step a) by the owner of the PCBSU 30 during setup. The preferred user terminals are those of the usual users of the PCBSU, for example family members of a PCBSU bought for home use, or office workers of a PCBSU bought for office use.

Handover requests from preferred user terminals are acted upon by the PCBSU 30 without, of course, being counted by counter 50. Handover requests from other user terminals are counted (step b) in the counter 50, and in this embodiment, those requests are acted upon to effect handovers.

After counting for a predetermined period, the count is evaluated in the reposition decision stage by being compared (step c) to a predetermined threshold.

If the threshold is not exceeded, then (step d) the counter is reset and counting of handover requests from non-preferred user terminals is restarted.

### Indicating that PCBSU should be repositioned

As also shown in Figure 4, on the other hand, if the threshold is exceeded, then the reposition indicator 54 is instructed by the reposition decision stage 52 to inform (step e) the owner of the picocell base station unit (PCBSU) 30 that the PCBSU is not placed in an acceptable position so should be repositioned (for example by relocation and reorientation). In this example, the owner is so informed by the reposition indicator 54 sending a Short Message Service (SMS) message to the PCBSU owner's user terminal, such as his/her mobile terminal.

### Reducing Transmit Power

As shown in Figure 4, the next step is to reduce (step f) transmit power. Specifically, the PCBSU 30 reduces the power of its pilot channel so as to reduce chances of the PCBSU being detected by non-preferred users who might be, for example, in a street near to the building. The PCBSU 30 also lowers the transmit power of all other channels so as to seek to reduce its interference to macrocell user terminals.

In this example, the degree of transmit power lowering to be applied is preset in the PCBSU 30. The degree of lowering was selected during manufacture, for example dependent upon the preference of the anticipated network operator. In this example, preference is given to the interests of the preferred users by the degree of lowering having been selected to be moderate. Accordingly, the power levels are lowered only to an extent that quality of service to preferred user terminals is not degraded despite interference to non-preferred (macrocell) users remaining.

In an otherwise similar example (not shown), preference is given to the interests of non-preferred (macrocell) user terminals by the degree of lowering being selected to be severe. Accordingly, power levels are reduced severely so as to severely reduce interference to non-preferred user terminals despite the reduction in quality of service to preferred user terminals. In another, otherwise similar, example (not shown), the PCBSU can instead stop transmitting altogether. This option may be preferred where network operators would wish to give precedence to the macrocell network performance over that of the PCBSU. This would also serve as an incentive for users to reposition their PCBSU quickly.

In another, otherwise similar, example (not shown), which type of degree of lowering to apply, namely moderate or severe, is selected automatically; for example severe lowering is selected upon the PCBSU being persistently determined as being in an inappropriate position.

### Moving PCBSU and resetting

Returning to the example shown in Figure 4, the picocell base station unit (PCBSU) 30 is switched off, and repositioned (step g) by the owner by being moved to another location and/or into another orientation (for example in azimuth), within the building. Once the PCBSU 30 has been moved, it is switched on again, causing the counter 50 of handover requests from non-preferred user terminals to be re-zeroed (step h) then the process of counting (step b) requests for handovers from non-preferred user terminals starts again.

### Some more alternative examples

In an otherwise similar embodiment (not shown) to that shown in Figure 4, only handover requests from preferred user terminals result in handover. Handover requests from non-preferred user terminals are recorded and in response to each handover request, the handover process is initiated. However authorisation of a non-preferred user terminal to handover is denied, so handover is not completed.

In some embodiments, rather than, or in addition to, the owner of the PCBSU being informed to move the PCBSU by SMS message to his/her user terminal, a visual prompt is provided, such as a status light on the PCBSU outer casing. In some embodiments, a less discrete means of indication is provided, such as a loudspeaker giving audible "beep" tones. Such less discrete indicators are particularly useful as a second stage of indication upon finding that more discrete indicators (e.g. SMS message, visual status light) have not caused the owner to reposition the PCBSU within a predetermined time period.

In some exemplary embodiments, rather than noting PCBSU switch-on as a trigger to reset the counter of handover requests from non-preferred user terminals, the PCBSU detects that the PCBSU has been moved by identifying a significant change in a received signal, such as power level.

In some embodiments, instead of resetting the counter to a zero count upon the PCBSU being moved, a running average is kept of the number of handover requests from non-preferred user terminals within a limited time window, for example, in the last so-many minutes. Accordingly, only recent occurrences of handover requests from non-preferred users are considered. In some embodiments, the time window size can be varied.

In some exemplary embodiments, a picocell base station unit (PCBSU) owner is provided with information as to possible degradation of quality of service being experienced. This can be an incentive for the owner to move the PCBSU.

### General

The present invention may be embodied in other specific forms without departing from its essential characteristics. The described embodiments are to be considered in all respects only as illustrative and not restrictive. The scope of the invention is, therefore, indicated by the appended claims rather than by the foregoing description.

## Claims

1. A method of adjusting the position of a picocell base station (30) having a memory (46) in which is stored a list (48) of at least one preferred user terminal (44), each preferred user terminal having been authorised for communication with the picocell base station (30), the method comprising the steps of the picocell base station:
determining a rate of receipt of requests from other user terminals (35) for handover to the picocell base station by counting (50, b) the handover requests from the other user terminals;
dependent upon the rate of receipt exceeding (c) a threshold, sending (e) an indicator signal (54) to a controller of the picocell base station indicating that the picocell base station should be repositioned.

2. A method according to claim 1, in which the controller is a human being operative to alter the position of the picocell base station in response to the indicator signal.

3. A method according to any preceding claim, in which the indicator signal provides a visual indicator.

4. A method according to any preceding claim, in which a determination is made whether the picocell base station has been repositioned within a predetermined time of the sending of the indicator signal, and if not, a further indicator signal is sent.

5. A method according to claim 4, in which the further indicator signal is an audible signal.

6. A method according to any preceding claim, in which the transmit power of the picocell base station is reduced (f) dependent upon said rate of receipt exceeding (c) said threshold.

7. A picoccll base station (30) operative to communicate with user terminals, and having a memory (46) in which is stored a list (48) of at least one preferred user terminal (44), each preferred user terminal having been authorised for communication with the picocell base station (30);
the base station (30) comprising a counter (50), a reposition decision stage (52) and an reposition indicator (54);
the counter (50) being operative to count (b) the number of handover requests from user terminal other than the preferred user terminals over a predetermined period;
the reposition decision stage (52) being operative to determine (c) whether the count over a predetermined period has exceeded a threshold, and dependent upon the result of that determination to send a control signal to the reposition indicator (54);
the reposition indicator (54) being operative to respond to the control signal by sending a signal (e) indicating that repositioning of the picocell base station is desirable.

8. A picocell base station according to claim 7, including the memory (46) operative to store (a) as the list (48) identifiers of preferred user terminals so as to differentiate handover requests from non-preferred user terminals from those of preferred user terminals.

9. A picocell base station according to claim 7 or 8, in which the counter (50) is operative to count, over the predetermined period, the number of handover requests only from non-preferred user terminals.

10. A picocell base station according to any of claims 7 to 9, further comprising a power control stage (56), and the reposition decision stage (52) being operative to also send the control signal to the power control stage (56) upon determination that the count over the predetermined period has exceeded the threshold, the power control stage (56) being operative to reduce transmit power in response.

## Patentansprüche

1. Ein Verfahren zum Einstellen der Position einer Picozellen-Basisstation (30) mit einem Speicher (46), in welchem eine Liste (48) von mindestens einem bevorzugten Benutzerendgerät (44) gespeichert wird, wobei jedes bevorzugte Benutzerendgerät für die Kommunikation mit der Picozellen-Basisstation (30) freigegeben wurde, wobei das Verfahren die folgenden Schritte der Picozellen-Basisstation umfasst:
Bestimmen einer Empfangsrate von Anforderungen von anderen Benutzerendgeräten (35) für einen Handover an die Picozellen-Basisstation durch Zählen (50, b) der Handover-Anforderungen von den anderen Benutzerendgeräten;
wenn die Empfangsrate einen Grenzwert überschreitet (c), Senden (e) eines Anzeigesignals (54) an einen Controller der Picozellen-Basisstation, welches anzeigt, dass die Picozellen-Basisstation umpositioniert werden sollte.

2. Ein Verfahren nach Anspruch 1, wobei der Controller ein Mensch ist, welcher fähig ist, die Position der Picozellen-Basisstation in Reaktion auf das Anzeigesignal zu ändern.

3. Ein Verfahren nach einem beliebigen der vorstehenden Ansprüche, wobei das Anzeigesignal eine optische Anzeige bereitstellt.

4. Ein Verfahren nach einem beliebigen der vorstehenden Ansprüche, wobei ermittelt wird, ob die Picozellen-Basisstation innerhalb einer vorbestimmten Sendezeit des Anzeigesignals umpositioniert wurde, und, wenn nicht, ein weiteres Anzeigesignal gesendet wird.

5. Ein Verfahren nach Anspruch 4, wobei das weitere Anzeigesignal ein akustisches Signal ist.

6. Ein Verfahren nach einem beliebigen der vorstehenden Ansprüche, wobei die Sendeleistung der Picozellen-Basisstation reduziert (f) wird, wenn die besagte Empfangsrate den besagten Grenzwert (c) überschreitet.

7. Eine Picozellen-Basisstation (30), welche funktionsbereit ist, um mit Benutzerendgeräten zu kommunizieren, und mit einem Speicher (46) ausgestattet ist, in welchem eine Liste (48) von mindestens einem bevorzugten Benutzerendgerät (44) gespeichert wird, wobei jedes bevorzugte Benutzerendgerät für die Kommunikation mit der Picozellen-Basisstation (30) freigegeben wurde;
wobei die Basisstation (30) einen Zähler (50), eine Umpositionierungs-Entscheidungsstufe (52) und eine Umpositionierungsanzeige (54) umfasst;
wobei der Zähler (50) funktionsbereit ist, um die Anzahl der Handover-Anforderungen von einem Benutzerendgerät, welches nicht eines der bevorzugten Benutzerendgeräte ist, über einen vorbestimmten Zeitraum hinweg zu zählen;
wobei die Umpositionierungs-Entscheidungsstufe (52) funktionsbereit ist, um zu ermitteln (c), ob die Anzahl über einen vorbestimmten Zeitraum hinweg einen Grenzwert überschritten hat, und, abhängig von dem Ergebnis, ein Steuersignal an die Umpositionierungsanzeige (54) zu senden;
wobei die Umpositionierungsanzeige (54) funktionsbereit ist, um auf das Kontrollsignal mit Senden eines Signals (e), welches anzeigt, dass ein Umpositionieren der Picozellen-Basisstation erwünscht ist, zu reagieren.

8. Eine Picozellen-Basisstation nach Anspruch 7, ausgestattet mit einem Speicher (46), welcher funktionsbereit ist, um Kennungen von bevorzugten Benutzerendgeräten als die Liste (48) zu speichern (a), um Handover-Anforderungen von nicht bevorzugten Benutzerendgeräten von denen der bevorzugten Benutzerendgeräten zu unterscheiden.

9. Eine Picozellen-Basisstation nach Anspruch 7 oder 8, wobei der Zähler (50) funktionsbereit ist, um über einen vorbestimmten Zeitraum hinweg die Anzahl der nur von nicht bevorzugten Benutzerendgeräten ausgegebenen Handover-Anforderungen zu zählen.

10. Eine Picozellen-Basisstation nach einem beliebigen der Ansprüche 7 bis 9, weiterhin umfassend eine Leistungssteuerungsstufe (56), wobei die Umpositionierungs-Entscheidungsstufe (52) funktionsbereit ist, um ebenfalls ein Kontrollsignal an die Leistungssteuerungsstufe (56) zu senden, wenn ermittelt wurde, dass die Anzahl über den vorbestimmten Zeitraum hinweg den Grenzwert überschritten hat, wobei die Leistungssteuerungsstufe (56) funktionsbereit ist, um die Übertragungsleistung in Reaktion darauf zu reduzieren.

## Revendications

1. Procédé d'ajustement de la position d'une station de base picocellulaire (30) possédant une mémoire (46) dans laquelle est stockée une liste (48) d'au moins un terminal utilisateur préféré (44), chaque terminal utilisateur préféré ayant été autorisé à communiquer avec la station de base picocellulaire (30), le procédé comprenant les étapes suivantes de la station de base picocellulaire :
détermination d'un taux de réception de requêtes depuis les autres terminaux utilisateur (35) pour un transfert à la station de base picocellulaire en comptant (50, b) les requêtes de transfert des autres terminaux utilisateur ;
si le taux de réception dépasse (c) un seuil, envoi (e) d'un signal d'indication (54) à un contrôleur de la station de base picocellulaire indiquant que la station de base picocellulaire doit être repositionnée.

2. Procédé selon la revendication 1, dans lequel le contrôleur est un humain capable de modifier la position de la station de base picocellulaire en réponse au signal d'indication.

3. Procédé selon l'une quelconque des revendications précédentes, dans lequel le signal d'indication fournit un indicateur visuel.

4. Procédé selon l'une quelconque des revendications précédentes, dans lequel il est déterminé si la station de base picocellulaire a été repositionnée dans un temps prédéterminé après l'envoi du signal d'indication et si ce n'est pas le cas, un signal d'indication supplémentaire est envoyé.

5. Procédé selon la revendication 4, dans lequel le signal d'indication supplémentaire est un signal sonore.

6. Procédé selon l'une quelconque des revendications précédentes, dans lequel la puissance d'émission de la station de base picocellulaire est réduite (f) si ledit taux de réception dépasse (e) ledit seuil.

7. Station de base picocellulaire (30) fonctionnant pour communiquer avec des terminaux utilisateur et possédant une mémoire (46) dans laquelle est stockée une liste (48) d'au moins un terminal utilisateur préféré (44), chaque terminal utilisateur préféré ayant été autorisé à communiquer avec la station de base picocellulaire (30) ;
la station de base (30) comprenant un compteur (50), un étage de décision de repositionnement (52) et un indicateur de repositionnement (54) ;
le compteur (50) fonctionnant pour compter (b) le nombre de requêtes de transfert provenant d'un terminal utilisateur autre que les terminaux utilisateur préférés sur une période prédéterminée ;
l'étage de décision de repositionnement (52) fonctionnant pour déterminer (c) si le comptage sur une période prédéterminée a dépassé un seuil et en fonction du résultat de la détermination, pour envoyer un signal de commande à l'indicateur de repositionnement (54) ;
l'indicateur de repositionnement (54) fonctionnant pour répondre au signal de commande en envoyant un signal (e) indiquant que le repositionnement de la station de base picocellulaire est souhaitable.

8. Station de base picocellulaire selon la revendication 7, comprenant la mémoire (46) fonctionnant pour stocker (a) dans une liste (48) des identifiants des terminaux utilisateur préférés de manière à différencier les requêtes de transfert provenant de terminaux utilisateur non préférés de celles provenant des terminaux utilisateur préférés.

9. Station de base picocellulaire selon la revendication 7 ou 8, dans laquelle le compteur (50) fonctionne pour compter, sur la période prédéterminée, uniquement le nombre de requêtes de transfert provenant de terminaux utilisateur non préférés.

10. Station de base picocellulaire selon l'une quelconque des revendications 7 à 9, comprenant en outre un étage de réglage de puissance (56), et l'étage de décision de repositionnement (52) fonctionnant pour envoyer également le signal de commande à l'étage de réglage de puissance (56) suite à la détermination que le comptage sur la période prédéterminée a dépassé le seuil, l'étage de réglage de puissance (56) fonctionnant pour réduire la puissance d'émission en réponse.
